Europäisches Patentamt

European Patent Office

Office européen des brevets

(19)

(11) Numéro de publication: **0 322 469 B1**

# FASCICULE DE BREVET EUROPEEN

(45) Date de publication de fascicule du brevet:
07.08.91

(51) Int. Cl.5: **A23G 9/02, A23G 9/26,**
**A23G 9/08, A23G 9/28**

(21) Numéro de dépôt: **87119205.0**

(22) Date de dépôt: **24.12.87**

(54) Article glacé moulé et procédé de fabrication.

(43) Date de publication de la demande:
**05.07.89 Bulletin 89/27**

(45) Mention de la délivrance du brevet:
**07.08.91 Bulletin 91/32**

(84) Etats contractants désignés:
**BE CH DE ES FR GB IT LI NL SE**

(56) Documents cités:
**WO-A-81/00190**     **BE-A- 651 434**
**FR-A- 1 539 694**   **FR-A- 2 401 616**
**GB-A- 2 135 437**   **US-A- 2 747 525**
**US-A- 2 975 732**   **US-A- 3 770 460**

(73) Titulaire: **FRISCO-FINDUS AG**
**Industriestrasse**
**CH-9400 Rorschach(CH)**

(72) Inventeur: **Nadler, Jacques**
**5, rue Fermepin**
**F-60000 Beauvais(FR)**

## Description

L'invention a trait aux articles glacés moulés en portion individuelle du type des bâtonnets, cônes, cylindres, sucettes et analogues.

Les consommateurs de ce genre d'articles apprécient la variété des formes, l'association des couleurs, des goûts et des textures. A titre d'illustration de ce qui existe, on peut mentionner les articles composites comprenant plusieurs couches de glace de parfums différents; ceux qui sont enrobés, par exemple de chocolat; ceux qui sont fourrés ou contiennent des inclusions, par exemple de sirop, de caramel ou de masse truffée; les cônes qui sont entourés d'un cornet en gaufrette. Ces articles composites peuvent être fabriqués par différents procédés.

Selon un procédé, décrit par exemple dans le brevet des Etats-Unis No. 2.048.364, on fabrique un bâtonnet glacé composite par congélation de sirop en couches successives à partir du centre, puis enrobage par trempage dans du chocolat fondu. Un autre procédé, décrit par exemple dans le brevet des Etats-Unis No. 2.747.525, consiste à congeler partiellement une matière liquide dans un moule à partir de la périphérie, à vidanger l'âme liquide, à remplir la coque ainsi formée avec une autre matière liquide de nature différente et à la congeler. Selon un troisième procédé, illustré par exemple par le brevet des Etats-Unis No. 2.975.732, on forme un creux dans une matière en cours de congélation dans un gobelet, à l'aide d'un tuyau rigide, on remplit le creux d'une autre matière et on congèle. Enfin, selon le brevet des Etats-Unis No. 3.770.460, on déplace l'âme liquide d'une matière partiellement congelée dans un moule en y introduisant une masse de confiserie de densité supérieure à celle du liquide.

La présente invention a pour but de fournir un article glacé possédant une structure nouvelle lui conférant des propriétés gustatives différentes de celles des produits en portion individuelle connus.

L'article glacé selon l'invention est caractérisé par le fait qu'il comporte au moins deux couches minces de matière croquante alternées avec des couches de matière moelleuse et que les différentes couches, vues en coupe transversale, ont le même centre de symétrie.

La sensation gustative nouvelle est basée sur le contraste de texture et de goût existant entre les différentes matières constitutives des couches alternées qui est perçue lorsque l'article est croqué : il y a un effet de surprise agréable, on a l'impression qu'il est feuilleté.

Ainsi la matière croquante est dure et cassante. Elle peut être constituée d'une composition grasse contenant des matières grasses à point de glissement supérieur à 0° C et spécialement supérieur à la température ambiante, par exemple, un beurre végétal comme le beurre de cacao, un produit de remplacement ou un équivalent du beurre de cacao, une huile végétale durcie, une fraction de graisse végétale ou une graisse transestérifiée; spécialement une couverture grasse d'utilisation courante en confiserie. Ce peut être également une composition essentiellement aqueuse ou encore sucrée, par exemple à base de sucre cuit. Une telle composition, qu'elle soit à base de graisse, d'eau ou de sucre peut contenir des additifs, par exemple des colorants, des arômes choisis en fonction du contraste désiré avec les couches voisines de matière moelleuse. La matière croquante doit pouvoir être appliquée en couche mince, par exemple par pulvérisation et former une couche continue en se refroidissant au contact de la couche moelleuse voisine. Elle est de préférence suffisamment mince pour se briser en petits éclats sous la dent, en pratique d'épaisseur inférieure à 1 mm et spécialement inférieure à 0,5 mm.

La matière moelleuse est une composition glacée aérée, par exemple une crème glacée ou un sorbet foisonnés.

Le contraste de texture est réalisé avantageusement par exemple, par l'assemblage en couches successives de crèmes glacées de parfums différents, associées à de fines couches intermédiaires de couverture en chocolat, l'ensemble étant enrobé d'une couverture en chocolat; par l'assemblage en couches successives de sorbets foisonnés de parfums différents, associés à de fines couches intermédiaires d'eau congelée, le cas échéant aromatisée, l'ensemble étant recouvert d'un glaçage d'eau congelée;

dans un mode de réalisation particulier, par la présence d'un noyau central constitué d'une émulsion grasse non foisonnée du type fondant ou truffe au chocolat, associée à des couches alternées de crème glacée et de couverture en chocolat;

dans une variante de ce mode de réalisation particulier, par l'association d'un noyau central constitué d'une émulsion grasse non foisonnée aromatisée aux fruits et de couches alternées de sorbets aux fruits foisonnés et d'eau congelée.

Les couches de crème glacée ou de sorbet peuvent contenir des morceaux de fruits confits, de fruits séchés, de noix, de noisette. Les fruits et morceaux de fruits, de même que les sorbets peuvent être aromatisés aux alcools et liqueurs; la couverture grasse d'enrobage extérieur peut contenir également des morceaux de noix, de noisette, des flocons de céréales, des granulés de praliné, de caséine extrudée, etc.

L'article peut se présenter sous la forme d'une sucette glacée, c'est à dire qu'il comporte un bâtonnet de préhension en son centre. La sucette peut avoir un profil polygonal, par exemple rectangulaire, triangulaire, carré, en étoile, etc, vue en coupe transversale, et les différentes couches constituent alors des polygones emboîtés les uns dans les autres qui ont le même centre de symétrie. Elle peut avoir un profil elliptique, ou circulaire, etc, auquel cas les différentes couches, vues en coupe transversale, sont concentriques.

En variante, ce peut être un cône glacé, auquel cas les différentes couches se présentent sous forme de cônes de crème glacée coaxiaux, emboîtés les uns dans les autres et placés dans un cornet en gaufrette revêtu à l'intérieur d'une fine couche de couverture grasse jouant le rôle de barrière d'humidité.

L'invention concerne également un procédé de fabrication des articles précédents.

L'invention sera mieux comprise à partir de la description qui va suivre faite en regard des dessins annexés montrés à titre explicatif et nullement limitatif dans lesquels :

- la figure 1 illustre schématiquement un premier mode de fabrication d'une sucette glacée et l'article obtenu en coupe transversale,
- la figure 2 est un schéma d'une variante de réalisation d'une sucette glacée,
- la figure 3 est un schéma d'un mode de réalisation particulier d'une sucette glacée et une vue en coupe transversale de l'article obtenu et
- la figure 4 illustre la fabrication d'un cône glacé. Sauf indication contraire, les pourcentages sont en poids.

D'une manière générale, on fabrique les sucettes glacées en introduisant la matière liquide dans un alvéole qui chemine successivement dans un milieu de congélation, par exemple dans un bac contenant de la saumure, de l'eau glycolée ou tout autre mélange eutectique convenable, à - 40° C, puis dans un milieu de décongélation constitué par exemple par un bac de saumure à + 30° C. Dans la phase de congélation, on pose un bâtonnet dans la matière en cours de solidification. Dans la phase de décongélation, on extrait la sucette de l'alvéole par préhension du bâtonnet après décongélation superficielle. Le cas échéant, on trempe ensuite la sucette dans un liquide d'enrobage qui se solidifie en couche mince à son contact.

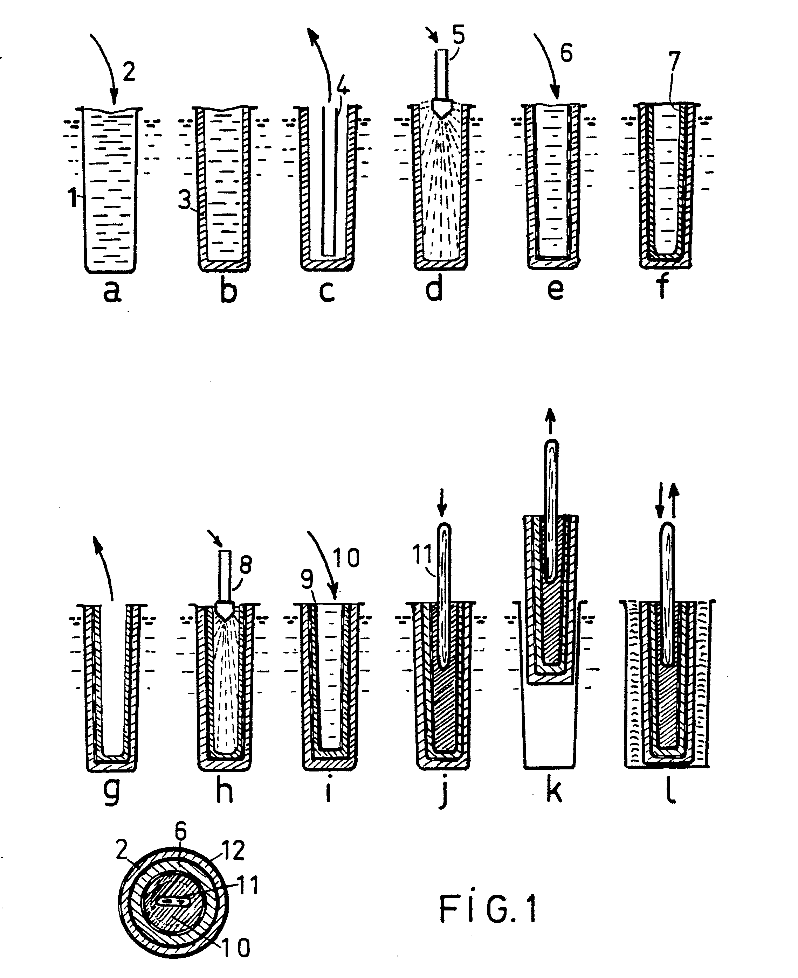

En référence à la figure 1, en a, on remplit l'alvéole 1 du liquide 2 , constitué par exemple de composition pour sorbet à la fraise, foisonné à 20% (contenant 20% en volume d'air). Après un temps d'attente de quelques min, une croûte 3 se forme sur la paroi du moule en b. En c, on aspire l'âme liquide au moyen du tuyau 4. En d, on pulvérise de l'eau en fines gouttelettes qui se figent instantanément au contact de la croûte 3 en une mince pellicule de glace continue, au moyen d'un gicleur 5 à haute pression, par exemple 160 bar, sans incorporation d'air. La tête de pulvérisation du gicleur est conformée de manière à répandre l'eau de manière uniforme sur la paroi intérieure de la croûte.

On réalise ainsi une coque. En e, on remplit la coque, par exemple d'une composition pour sorbet au citron 6. Après un temps d'attente de quelques min, une croûte 7 s'est formée à la périphérie en f et on aspire l'âme liquide en g. En h, on gicle de l'eau en fines gouttelettes, au moyen d'un gicleur 8 pour former une mince pellicule de glace 9 et on remplit la nouvelle coque en i, par exemple d'une composition pour sorbet à la framboise 10. En j, on place un bâtonnet 11. Les étapes a à j se déroulent pendant la phase de congélation. En k, on extrait la sucette par préhension du bâtonnet après décongélation superficielle. Enfin, en 1, on trempe le bâtonnet dans de l'eau de manière à réaliser un glaçage de surface 12 et on l'extrait.

Bien entendu, on peut réaliser des associations de parfums différents de la précédente. Par exemple, les liquides 2, 6 et 10 sont respectivement : composition pour sorbet guanabana, kiwi, framboise; composition pour sorbet mandarine, guanabana, framboise.

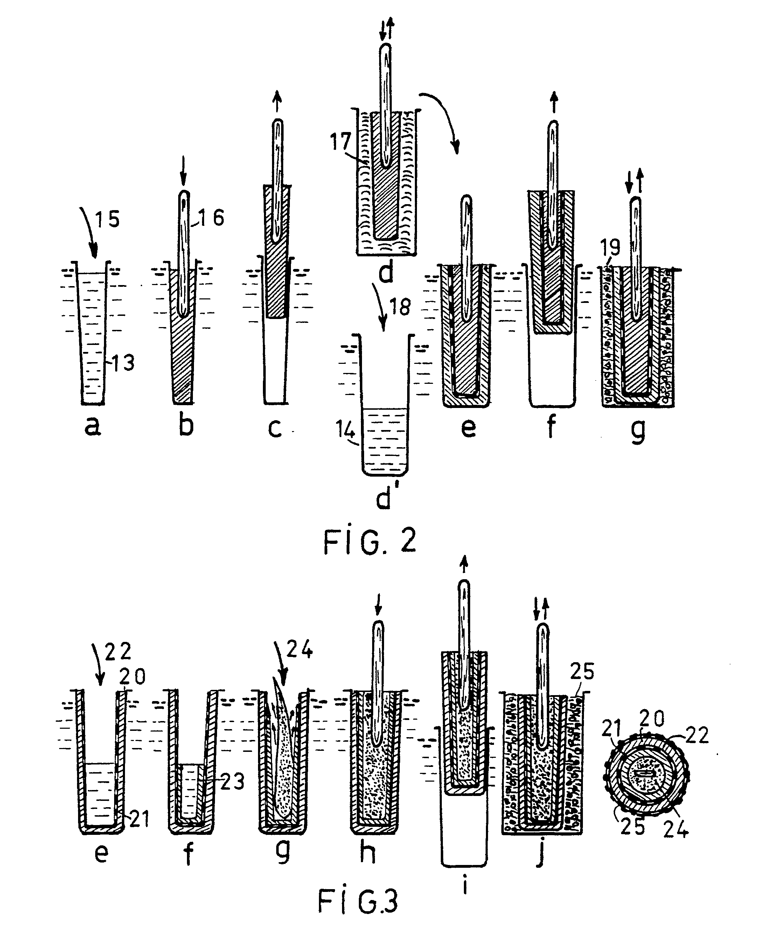

Selon la figure 2, la congélation s'effectue successivement dans deux alvéoles 13, puis 14. L'alvéole 13 sert à mouler le noyau central et l'alvéole 14, de volume environ double, la sucette définitive. En a, on remplit l'alvéole 13 d'une composition liquide pour crème glacée au chocolat 15, foisonnée à 30%. Après avoir posé en b un bâtonnet 16, on réchauffe l'alvéole 13 et on démoule le noyau en c par préhension du bâtonnet. En d, on trempe le noyau dans une composition grasse liquide aromatisée au café 17, à base de 40% de graisse végétale hydrogénée pour 60% de chocolat blanc aromatisé au café, puis on l'extrait.

Parallèlement en d', on remplit environ à moitié l'alvéole 14 d'une composition liquide pour crème glacée au café 18. Lorsque celle-ci devient pâteuse, on transfère en e le noyau dans l'alvéole 14 par préhension du bâtonnet 16, puis on réchauffe l'alvéole 14 et on démoule la sucette en f. Enfin dans l'étape g, on trempe le bâtonnet dans une composition grasse liquide d'enrobage 19 constituée de 54% de chocolat blanc, 36% de graisse végétale hydrogénée et 10% d'huile d'arachide. La composition d'enrobage 19 contient encore 38% de flocons de maïs, basé sur le poids de liquide, puis on extrait la sucette.

A la figure 3, les étapes a à d sont les mêmes que les étapes a à d décrites en liaison avec la figure 1, sauf que les couches 20 et 21 sont respectivement de la crème glacée aromatisée au chocolat blanc et une fine couche croquante de composition grasse comprenant 60% de chocolat noir pour 40% de graisse végétale hydrogénée. En e, on remplit la coque environ à moitié d'une composition liquide pour crème glacée 22 aromatisée au chocolat gianduja (aux noisettes) de densité 1,09 (mesurée à 20°C). Après un temps d'attente de quelques min, une croûte 23 se forme à l'étape f. En g, on verse un fondant pâteux 24, par exemple une émulsion grasse (huile dans l'eau), non foisonnée, à base de sucres liquides, de beurre laitier, de matières grasses végétales, de poudre de cacao et d'eau, de densité 1,104 (mesurée à 20°C). Du fait de sa plus grande densité, l'émulsion grasse déplace l'âme liquide de la crème glacée 22 vers la paroi supérieure de l'alvéole. Les étapes suivantes, de pose d'un bâtonnet (h), de démoulage (i) et d'enrobage (j) avec une couverture de chocolat noir (25) contenant des flocons de maïs, s'effectuent comme indiqué précédemment (étapes j, k, l de la figure 1). Il va de soi que les matières constitutives des couches peuvent être différentes des précédentes. Ainsi, 20 peut être un sorbet de fruit exotique foisonné, 21 une fine couche d'eau congelée, 22 un sorbet guanabana de densité 1,11 (mesurée à 20°C), 24 un fondant à la framboise de densité 1,13 (mesurée à 20°C) et 25 un glaçage d'eau congelée.

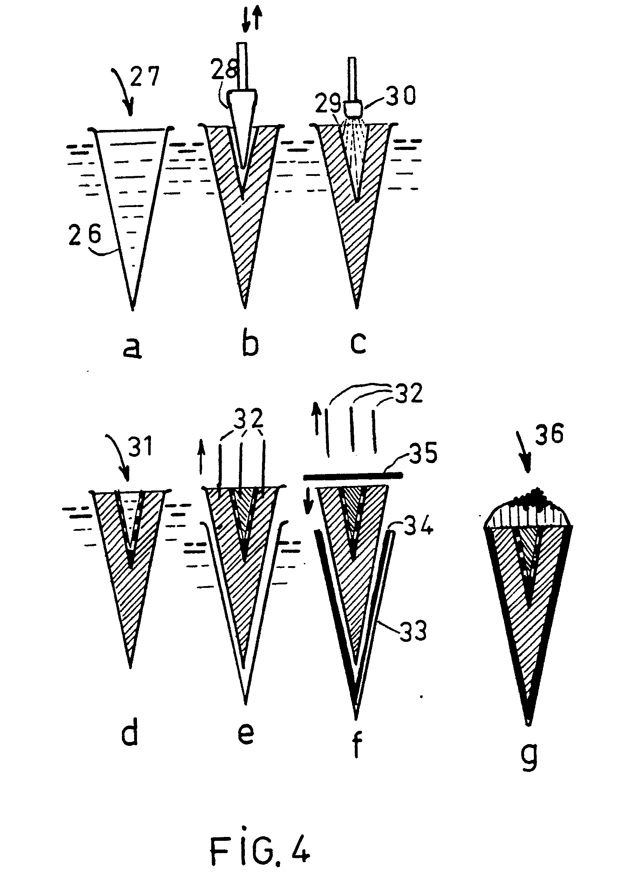

Selon la figure 4, on fabrique un cône glacé suivant le principe suivant :

- en a, on remplit l'alvéole conique 26 avec une matière 27;
- en b, on réalise une cavité conique dans la matière 27 en cours de congélation au moyen d'un poinçon 28, de préférence chauffé en surface ou tournant, de manière à éviter qu'il ne colle à la matière 27;
- en c, la pulvérisation du liquide destiné à former la couche croquante 29 s'effectue à l'aide d'un gicleur 30 de conformation adaptée;
- en d, on remplit la coque conique d'une matière 31, de nature différente de 29;
- en e, on réchauffe l'alvéole 26 et on extrait le cône glacé ou moyen des pointes 32;
- en f, on place le cône glacé dans le cornet en gaufrette 33 qui a été préalablement revêtu à l'intérieur d'une fine couche de couverture grasse 34, en faisant remonter les pointes 32 tout en maintenant fixe la fourchette 35;
- en g, on dépose une garniture 36 de crème glacée en forme de choux sur la face supérieure du cône, que l'on garnit ensuite de petits morceaux ou de poudre de chocolat.

Dans une variante non représentée de la fabrication des cônes, l'alvéole conique consiste en un cornet en gaufrette tel que 33 revêtu à l'intérieur d'une fine couche de couverture grasse 34. Dans un tel cas, les étapes a, b, c et d décrites en liaison avec la figure 4 restent les mêmes, à la différence près que le milieu de congélation est l'air froid d'un tunnel dans lequel cheminent les cônes supportés par des plaques perforées solidaires d'une chaîne. Les opérations e et f de démoulage et d'insertion dans la gaufrette décrites à la figure 4 sont alors supprimées. Après dépose de la garniture telle qu'en g, le cône est éjecté par basculement des plaques support.

Selon une autre variante non représentée de la fabrication des cônes, on réalise d'abord dans un alvéole un noyau central tel que 31, on le démoule et on applique sur sa surface extérieure une fine couche de couverture grasse, par exemple par pulvérisation ou trempage. Parallèlement, on introduit une matière telle que 27 dans une gaufrette telle que 33 revêtue à l'intérieur d'une fine couche de couverture grasse 34, de manière à la remplir partiellement, par exemple d'environ la moitié du volume intérieur, puis, après avoir formé une croûte par congélation partielle à l'air, on y introduit le noyau précédent, de sorte que la matière 27 encore liquide entoure la partie supérieure du noyau central jusqu'au bord de la gaufrette et durcit. Après dépose de la garniture telle qu'en g, on achève la congélation à l'air.

Dans la description qui précède des différentes variantes du procédé selon l'invention, on a décrit les opérations par référence à un alvéole, un gicleur etc. Bien entendu, dans une installation industrielle, un moule comporte une série d'alvéoles en lignes et le nombre des têtes doseuses, des gicleurs, des dispositifs de pose et de préhension des bâtonnets ou cônes est adapté au nombre d'alvéoles dans chaque ligne. La durée des différentes opérations qui détermine les mouvements et les poses est dictée par le type d'installation (par exemple en carrousel, en ligne ou en rectangle) et la cadence de fabrication souhaitée.

## Revendications

1. Article glacé moulé en portion individuelle, caractérisé par le fait qu'il comporte au moins deux couches minces de matière croquante alternées avec des couches de matière moelleuse et que les différentes couches, vues en coupe transversale, ont le même centre de symétrie.

2. Article selon la revendication 1, se présentant sous la forme d'un bâtonnet ou d'un cône.

3. Article selon la revendication 2, caractérisé par le fait que la matière moelleuse est une crème glacée aérée et que la matière croquante est une composition grasse contenant des matières grasses à point de glissement supérieur à 0°C.

4. Article selon la revendication 2, caractérisé par le fait que la matière moelleuse est un sorbet aux fruits aéré et que la matière croquante est de l'eau congelée.

5. Procédé de fabrication d'un article selon la revendication 1, caractérisé par les opérations suivantes :

I) On remplit un alvéole d'une matière à l'état liquide qui est de nature à prendre une consistance moelleuse à l'état congelé, on la congèle partiellement depuis l'extérieur, puis on enlève l'âme liquide, de manière à réaliser une cavité,

II) On applique en couche mince sur les parois de la cavité une matière à l'état liquide qui est de nature à prendre une consistance croquante à l'état congelé et on laisse durcir celle-ci au contact de la matière moelleuse, de manière à former une coque qui joue le rôle de moule,

III) On répète les opérations précédentes jusqu'au centre en alternant les matières moelleuses et croquantes,

IV) On introduit le cas échéant un bâtonnet, on congèle et on démoule l'article.

6. Procédé selon la revendication 5, caractérisé par le fait que l'on remplace l'opération III) par III$_1$) ci-après : on introduit dans la coque une première matière à l'état liquide qui est de nature à prendre une consistance moelleuse à l'état congelé, jusqu'à remplir environ la moitié de la coque et on la congèle partiellement, puis on introduit une seconde matière à l'état pâteux dont la densité est telle qu'elle occupe l'espace préalablement rempli par la première matière encore à l'état liquide de densité moindre et déplace cette dernière vers la paroi de la coque cependant qu'elle occupe l'espace central jusqu'au niveau du bord supérieur de l'alvéole.

7. Procédé selon la revendication 5, caractérisé par le fait que l'on remplace l'opération I) par I$_1$) et que l'on ajoute l'opération V) ci-après :

I$_1$) L'alvéole étant conique, on forme une cavité dans la matière moelleuse en cours de congélation à l'aide d'un poinçon conique,

V) On introduit l'article démoulé dans un cornet en gaufrette préalablement revêtu à l'intérieur d'une couverture grasse.

8. Procédé selon la revendication 7, caractérisé par le fait que dans l'opération I$_1$, l'alvéole est constitué d'un cornet en gaufrette préalablement revêtu à l'intérieur d'une couverture grasse et que l'on supprime l'opération V).

9. Procédé de fabrication d'un article selon la revendication 1, caractérisé par les opérations suivantes:

I$_2$) On forme dans un alvéole cônique un noyau central de matière moelleuse que l'on démoule, puis que l'on revêt d'une couverture grasse,

II$_2$) Parallèlement, on remplit une gaufrette revêtue à l'intérieur d'une couverture grasse, jusqu'à environ la moitié, d'une seconde matière à l'état liquide que l'on congèle partiellement,

III$_2$) On introduit le noyau central formé en I$_2$) dans la gaufrette, ce qui provoque le déplacement du liquide résiduel autour du noyau central jusqu'au bord de la gaufrette et on congèle.

10. Procédé selon l'une des revendications 5 et 6, caractérisé par le fait que l'on enrobe l'article démoulé d'une couche de matière croquante.

## Claims

1. An iced article moulded in individual portions, characterized in that it comprises at least two thin layers of crispy material alternating with layers of soft material and in that the various layers, as seen in cross-section, have the same centre of symmetry.

2. An article as claimed in claim 1 in the form of a lolly or cone.

3. An article as claimed in claim 2, characterized in that the soft material is an aerated ice cream and in that the crispy material is a fat-based composition containing fats having a pour point above 0° C.

4. An article as claimed in claim 2, characterized in that the soft material is an aerated fruit sorbet and in that the crispy material is ice.

5. A process for the production of the article claimed in claim 1, characterized in that it comprises the following steps:

I) a cell is filled with a liquid material which tends to assume a soft consistency in the frozen state, the material is partially frozen from the outside and the liquid core is removed to form a cavity,

II) a liquid material which tends to assume a firm consistency in the frozen state is applied in a thin layer to the walls of the cavity and is left to harden in contact with the soft material to form a shell which acts as a mould,

III) the preceding steps are repeated up to the centre by alternating the soft and crispy materials,

IV) a stick is optionally introduced and the article is frozen and removed from the mould.

6. A process as claimed in claim 5, characterized in that step III) is replaced by the following step III$_1$): a first liquid material which tends to assume a soft consistency in the frozen state is introduced into the shell until the shell is approximately half-full and is then partially frozen, after which a second, pasty material is introduced, its density being such that it occupies the space previously filled by the first material still in the liquid state of lower density, and displaces the first material towards the wall of the shell while it occupies the central space to the level of the upper edge of the cell.

7. A process as claimed in claim 5, characterized in that step I) is replaced by I$_1$) and in that step V) below is added:

I$_1$) the cell being conical, a cavity is formed in the soft material during freezing by means of a conical punch,

V) the article removed from its mould is introduced into a cornet wafer internally coated beforehand with a fat-based coating.

8. A process as claimed in claim 7, characterized in that, in step I$_1$, the cell is formed by a cornet wafer internally coated beforehand with a fat-based coating and step V) is omitted.

9. A process for the production of the article claimed in claim 1, characterized in that it comprises the following steps:

I$_2$) a central core of soft material is formed in a conical cell, removed therefrom and then coated with a fat-based covering,

II$_2$) at the same time, a wafer coated internally with a fat-based coating is approximately half-filled with a second liquid material which is partially frozen,

III$_2$) the central core formed in I$_2$) is introduced into the wafer so that the residual liquid around the central core is displaced to the edge of the wafer and the whole is frozen.

10. A process as claimed in claim 5 or 6, characterized in that the article removed from its mould is coated with a layer of crispy material.

## Patentansprüche

1. Gefrorener in einzelne Portionen geformter Gegenstand, dadurch gekennzeichnet, daß er mindestens zwei dünne Schichten eines knusprigen Materials abwechselnd mit Schichten eines weichen Materials aufweist und daß die verschiedenen Schichten im Querschnitt gesehen punktsymmetrisch sind.

2. Gegenstand nach Anspruch 1, der die Form einer Stange oder eines Kegels aufweist.

3. Gegenstand nach Anspruch 2, dadurch gekennzeichnet, daß das weiche Material ein belüftetes Speiseeis und das knusprige Material eine fetthaltige Zusammensetzung ist, die Fettmaterialien mit einem Schmelzpunkt über 0 °C enthält.

4. Gegenstand nach Anspruch 2, dadurch gekennzeichnet, daß das weiche Material ein belüftetes Fruchtsorbett ist und das knusprige Material gefrorenes Wasser ist.

5. Verfahren zum Herstellen eines Gegenstandes nach Anspruch 1, gekennzeichnet durch die folgenden Schritte:

I) man befüllt eine Zelle mit einem Material im flüssigen Zustand, das von solcher Natur ist, daß es im gefrorenen Zustand eine weiche Konsistenz annimmt, gefriert es teilweise von außen her und entfernt dann den flüssigen Kern, um eine Höhlung zu erzeugen,

II) trägt ein Material im flüssigen Zustand in dünner Schicht auf die Wandung der Höhlung auf, das von solcher Natur ist, daß es im gefrorenen Zustand eine knusprige Konsistenz annimmt, und läßt dieses Material in Berührung mit dem weichen Material aushärten, um eine Schale zu formen, die die Rolle einer Form spielt,

III) wiederholt die vorigen Schritte bis zum Zentrum, indem man die weichen und die knusprigen Materialien abwechselt,

IV) steckt erforderlichenfalls ein Stäbchen ein, gefriert und nimmt den Gegenstand aus der Form.

6. Verfahren nach Anspruch 5, dadurch gekennzeichnet, daß man den Schritt III) durch den folgenden Schritt III$_1$) ersetzt:

man bringt ein erstes Material in flüssigem Zustand, das von solcher Natur ist, daß es im gefrorenen Zustand eine weiche Konsistenz annimmt, in die Schale ein, bis etwa die Hälfte der Schale gefüllt ist, und gefriert es teilweise, dann bringt man ein zweites Material im teigartigen Zustand ein, das eine solche Dichte aufweist, daß es den Raum einnimmt, der zuvor mit dem ersten Material angefüllt war, das sich noch im flüssigen Zustand von geringerer Dichte befand, und dieses letztere in Richtung Schalenwand verdrängt, wobei es den mittleren Raum bis zu einem Niveau am oberen Rand der Zelle einnimmt.

7. Verfahren nach Anspruch 5, dadurch gekennzeichnet, daß man den Schritt I) durch folgenden Schritt I₁) ersetzt und folgenden Schritt V) hinzufügt:

I₁) in einer kegelförmigen Zelle bildet man während des Gefrierens mit Hilfe eines kegelförmigen Stempels eine Höhlung in dem weichen Material,

V) steckt den aus der Form genommenen Gegenstand in eine Waffeltüte, die vorher im Inneren mit einem Fettüberzug überzogen wurde.

8. Verfahren nach Anspruch 7, dadurch gekennzeichnet, daß beim Schritt I₁) die Zelle von einer Waffeltüte, die vorher im Inneren mit einem Fettüberzug überzogen wurde, gebildet wird und daß man Schritt V) ausläßt.

9. Verfahren zum Herstellen eines Gegenstandes nach Anspruch 1, gekennzeichnet durch die folgenden Schritte:

I₂) man formt einen Mittelkern aus weichem Material in einer kegelförmigen Zelle, entnimmt ihn aus der Form und überzieht ihn dann mit einem Fettüberzug,

II₂) füllt parallel dazu eine Waffel, die im Inneren mit einem Fettüberzug überzogen wurde, bis etwa zur Hälfte mit einem zweiten Material in flüssigem Zustand und gefriert dieses teilweise,

III₂) steckt den in I₂) geformten Mittelkern in die Waffel, der ein Verdrängen der Restflüssigkeit um den Mittelkern herum bis zum Rand der Waffel bewirkt, und gefriert.

10. Verfahren nach einem der Ansprüche 5 und 6, dadurch gekennzeichnet, daß man den aus der Form genommenen Gegenstand mit einer Schicht knusprigen Materials umgibt.

FIG.1

FIG. 2

FIG.3

FIG. 4